# EUROPÄISCHE PATENTSCHRIFT

(11) **EP 1 491 839 B1**
(45) Veröffentlichungstag und Bekanntmachung des Hinweises auf die Patenterteilung: **23.01.2008**
(21) Anmeldenummer: 04013433.0
(22) Anmeldetag: 08.06.2004
(51) Int. Cl.: F28F 1/14, F28D 1/053, F24D 3/12

(54) **Profilkörper mit Längsrippen und Teilrippen**
Extruded body with longitudinal fins and louvers
Profilé avec ailettes longitudinales et ouies

(30) Priorität: 23.06.2003 DE 10328288
(43) Veröffentlichungstag der Anmeldung: 29.12.2004
(73) Patentinhaber: The Heating Company BVBA, 3650 Dilsen-Stokkem (BE)
(72) Erfinder: Stevens, Guido, 3650 Dilsen-Stokkem (BE)
(74) Vertreter: Schrooten, Rolf

(56) Entgegenhaltungen:
- US-A- 2 887 564
- US-A- 3 379 241
- US-A- 5 542 603
- PATENT ABSTRACTS OF JAPAN Bd. 010, Nr. 331 (M-533), 11. November 1986 (1986-11-11) & JP 61 134527 A (MITSUBISHI ELECTRIC CORP), 21. Juni 1986 (1986-06-21)

## Beschreibung

Die vorliegende Erfindung betrifft einen wärmeübertragenden, insbesondere stranggepressten Profilkörper für eine Heiz- oder Kühlvorrichtung, mit einer Grundfläche, an der eine oder bevorzugt mehrere in Längsrichtung des Profilkörpers verlaufende Längsrippen zur Wärmeabgabe oder Wärmeaufnahme angeordnet ist, gemäß des Oberbegriffes des Anspruchs 1.

Derartige Profilkörper sind zum Beispiel aus der US-A-3 379 241 bekannt. Sie werden üblicherweise als aus Leichtmetall stranggepresste Abschnitte insbesondere an Kühldecken oder Kühlwänden zur Kühlung von Räumen eingesetzt. In kleineren Ausführungsformen werden sie oftmals auch zur Kühlung elektrischer Bauteile verwendet. Ein anderes Einsatzgebiet liegt im Bereich der Heizkörper, wobei Profilkörper der eingangs genannten Art der Erwärmung von Räumen dienen. Hierbei wird von den Profilkörpern Wärme abgegeben, die ihnen über ein Wärmeträgermedium zugeführt wird.

Zur Verbesserung der Wärmeübertragung ist es bekannt, Rippen an den Profilkörpern anzuordnen, um die Oberfläche zu vergrößern, über die Wärme abgegeben oder ausgenommen werden kann. Bei Stranggussprofilen werden die Rippen dabei üblicherweise direkt mit an den Profilkörper angegossen. Es ist jedoch auch bekannt, die Rippen nachträglich an dem Profilkörper zu befestigen.

Insbesondere wenn die Profilkörper zur Wärmeabgabe an Heizkörpern eingesetzt werden, ist es dabei im Sinne einer möglichst optimalen Konvektion erstrebenswert, die Rippen in senkrechter Ausrichtung anzuordnen, damit erwärmte Luft ungestört nach oben aufsteigen kann. Dies ist bei einer senkrechten Anordnung des Profilkörpers auch problemlos möglich, da dann auch die Rippen senkrecht angeordnet sind.

Wenn jedoch in bestimmten Fällen die Montage des Profilkörpers in einer nicht senkrechten, insbesondere waagerechten Ausrichtung erforderlich ist, ist eine gute Konvektion nicht mehr möglich, da die dann schräg bzw. waagerecht verlaufenden Rippen den Aufstieg erwärmter Luft behindern oder in geschlossenen Heizkörperkonstruktionen sogar vollständig unterbinden können.

Es wäre daher wünschenswert, für derartige waagerechte Einbaufälle Profilkörper mit quer verlaufenden Rippen einzusetzen, die dann wiederum senkrecht ausgerichtet wären und eine optimale Konvektion ermöglichen würden.

Aus der deutschen Offenlegungsschrift DE 198 30 512 A1 ist ein Kühlkörper mit Querrippen bekannt, bei dem jedoch jede einzelne Querrippe als separates Bauteil separat an einem Basisprofil befestigt werden muss. Das bedeutet einen erheblichen fertigungstechnischen Aufwand und damit verbundene sehr hohe Herstellungskosten. Außerdem weist das Basisprofil hierbei Einsatznuten und/oder vorstehenden Rippensockel auf an denen die einzelnen Querrippen befestigt werden. Dabei müssen entweder die Rippensockel geschlitzt oder die Querrippen mit dem Profil der Rippensockel entsprechenden Ausnehmungen ausgeführt werden, damit ein Ineinanderschieben der Querrippen und der Rippensockel des Basisprofils möglich ist. Diese speziellen Ausnehmungen erhöhen den konstruktiven Aufwand und die Herstellungskosten weiter.

Aufgabe der vorliegenden Erfindung ist es daher, einen konstruktiv einfachen und preiswert herzustellenden Profilkörper der eingangs genannten Art zu schaffen, der auf konstruktiv einfache Weise eine optimale Konvektion auch dann ermöglicht wenn der Profilköper in einer nicht senkrechten, insbesondere waagerechten Ausrichtung montiert wird.

Diese Aufgabe wird erfindungsgemäß durch einen Profilkörper nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass die mindestens eine Längsrippe mehrere durch Teilbereiche der Längsrippe gebildete Teilrippen aufweist, die jeweils an mindestens einer Kante durch einen Trennschnitt oder einen Spalt von der Längsrippe getrennt sind, und die in einem Winkel zwischen 3° und 135° derart aus der Längsrippe herausgeformt sind, dass zwischen den freien Kanten der Teilrippen und der Grundfläche der Längsrippe Öffnungen ausgebildet sind. Die Herausformung der Teilrippen kann dabei insbesondere durch Herausbiegen oder durch Herausklappen oder durch Herausschwenken erreicht werden.

Der Hauptvorteil liegt dabei darin, dass aufgrund der erfindungsgemäß erzeugten Öffnungen in der Längsrippe eine ungestörte Konvektion auch bei nicht senkrecht angebrachten Profilkörpern ermöglicht wird. Sogar bei waagerecht montierten Profilkörpern wird die aufsteigende Luft nicht durch die Längsrippe behindert, so dass vermittels der Öffnungen an den Teilrippen eine optimale Konvektion erreicht werden kann.

Wesentlich ist dabei, dass die Teilrippen als einstückiger Teil der Längsrippe aus der Längsrippe herausgebogen bzw. herausgeklappt sind. Sie brauchen daher nicht mit großem Aufwand als separate Elemente mit der Längsrippe oder mit dem Profilkörper verbunden werden, wodurch eine besonders einfache Konstruktion sowie eine besonders kostengünstige Herstellbarkeit erreicht wird.

Besonders vorteilhaft ist es, wenn mindestens eine Teilrippe an zwei einander gegenüberliegenden Kanten jeweils durch einen Trennschnitt von der Längsrippe getrennt und derart aus der Längsrippe herausgeformt ist, dass zwischen beiden freien Kanten des Teilrippe und der Grundfläche der Längsrippe jeweils eine Öffnung ausgebildet ist. Auf diese Weise können mehr oder größere Öffnungen in der Längsrippe erhalten werden, so dass eine noch bessere Konvektion möglich ist.

Bevorzugt wird die vorgenannte Ausbildung an mehreren oder allen Teilrippen vorgenommen. Gleiches gilt auch für die nachfolgende Beschreibung, wenn von mindestens einer Teilrippe die Rede ist.

Eine bevorzugte Ausrichtung der Teilrippen wird dadurch erreicht, dass die Trennschnitte senkrecht zur Längsrichtung der Längsrippe angeordnet sind, und dass die Teilrippen um eine senkrecht zur Längsrichtung der Längsrippe verlaufende Achse aus der Längsrippe herausgebogen oder herausgeklappt sind. Die erfindungsgemäßen Vorteile können jedoch genauso bei anderen Ausrichtungen bzw. Verläufen der Trennschnitte und/oder der Achse erreicht werden. So können die Trennschnitte und Achsen beispielsweise in beliebigen Winkeln zur Längsrichtung der Längsrippe orientiert und die Trennschnitte können insbesondere auch bogen- bzw. kurvenförmig geführt sein.

Eine vorteilhafte Vergrößerung der Öffnungen in der Längsrippe kann ferner auch dadurch erreicht werden, dass mindestens zwei, vorzugsweise mehrere Teilrippen paarweise unmittelbar aneinander angrenzen, wobei die Öffnung direkt zwischen diesen beiden Teilrippen ausgebildet ist.

Gemäß einer ersten besonders bevorzugten Ausführungsform der Erfindung ist vorgesehen, dass der einzige Trennschnitt oder beide Trennschnitte mindestens einer Teilrippe sich von einem in einem Abstand zur Grundfläche des Profilkörpers befindlichen ersten Bereich der Längsrippe durchgehend bis zu einem in einem Abstand zur freien Kante der Längsrippe befindlichen zweiten Bereich erstrecken, wobei an der freien Längskante der Längsrippe ein äußerer Steg und an der an der Grundfläche des Profilkörpers anliegenden Längskante der Längsrippe ein innerer Steg ausgebildet ist, die jeweils in Längsrichtung mindestens über die Breite der Teilrippe durchgehend verlaufen. Hierdurch wird eine besonders stabile Ausführung der Längsrippe erreicht.

Alternativ hierzu kann aber auch vorgesehen sein, dass der Trennschnitt oder die Trennschnitt mindestens einer Teilrippe sich von einem in einem Abstand zur Grundfläche des Profilkörpers befindlichen Bereich der Längsrippe durchgehend bis zur freien Kante der Längsrippe erstrecken, wobei an der an der Grundfläche des Profilkörpers anliegenden Längskante der Längsrippe ein in Längsrichtung mindestens über die Breite der Teilrippe durchgehend verlaufender innerer Steg ausgebildet ist, und wobei der sich über den Bereich der Teilrippe erstreckende Teil der freien Längskante der Längsrippe aus der Fläche der Längsrippe herausgeklappt oder herausgebogen ist. Hierdurch ergibt sich eine weitere Möglichkeit zur Vergrößerung der Öffnungen in der Längsrippe und somit zur Verbesserung der Konvektion, da an der freien Längskante der Längsrippe kein Steg verbleibt.

Gemäß einer weiteren besonders bevorzugten Ausführungsform der Erfindung wird vorgeschlagen, dass die Achse bzw. Linie, um die mindestens eine mit zwei voneinander beabstandeten Trennschnitten versehene Teilrippe aus der Längsrippe herausgeformt ist, zwischen den beiden Trennschnitten der Teilrippe, vorzugsweise in der Mitte zwischen den beiden Trennschnitten, verläuft. Die Teilrippe kann dann beispielsweise zweiflügelig um diese Achse verdreht bzw. verschwenkt sein, wobei je ein Flügel bzw. eine Hälfte der Teilrippe zu einer Seite der Längsrippe vorsteht. Auch kann die Teilrippe ausgehend von dieser Linie gebogen sein, wobei je ein Flügel bzw. eine Hälfte der Teilrippe zu einer Seite der Längsrippe vorsteht.

Alternativ zu dieser Ausführung wird vorgeschlagen, dass die Achse, um die mindestens eine mit nur einem Trennschnitt versehene Teilrippe aus der Längsrippe herausgeklappt ist, oder die Linie, von der ausgehend mindestens eine Teilrippe aus der Längsrippe herausgebogen ist, in einem Abstand parallel zum Trennschnitt dieser Teilrippe verläuft. Die gesamte Teilrippe steht dann einflügelig nur zu einer Seite der Längsrippe vor.

Eine ganz besonders bevorzugte Ausführungsform der Erfindung sieht vor, dass die Teilrippen über ihre vollständige Längserstreckung mit den innenseitigen Kanten des inneren Steges und des ggf. vorhandenen äußeren Steges ununterbrochen über Material der Rippen verbunden sind, das dabei annähernd in der Form eines Teilsegments einer Schnecke ausgebildet ist. Hierdurch wird ein besonders effektiver Wärmeübergang zwischen den Teilrippen und der Längsrippe und somit ein besonders hoher Wirkungsgrad des erfindungsgemäßen Profilkörpers erreicht.

Bei der vorgenannten zweiflügeligen Ausführung ist dabei vorteilhafterweise vorgesehen, dass die beiden sich jeweils zwischen einem der beiden Trennschnitte und der Achse mindestens einer Teilrippe erstreckenden Bereiche des inneren und ggf. des äußeren Steges durchgehend durch Material der Teilrippe bzw. durch Material der Längsrippe mit dem aus der Längsrippe herausgeformten Bereich der Teilrippe verbunden sind.

Bei der vorgenannten einflügeligen Ausführung ist dabei in ähnlicher Weise vorgesehen, dass der sich zwischen dem Trennschnitt und der Achse mindestens einer Teilrippe erstreckende Bereich des inneren und ggf. des äußeren Steges durchgehend durch Material der Teilrippe bzw. durch Material der Längsrippe mit dem aus der Längsrippe herausgeformten Bereich der Teilrippe verbunden ist.

Gemäß einer alternativen Ausführungsform wird demgegenüber vorgeschlagen, dass mindestens eine Teilrippe durch einen zusätzlichen Nebentrennschnitt von der Längsrippe getrennt ist, wobei der Nebentrennschnitt ausgehend von einem Kontaktpunkt des ersten Haupttrennschnitts in einem Winkel zu diesem verläuft, und dass der zwischen dem Kontaktpunkt und der Verbindungslinie zwischen den beiden freien Endpunkten des Nebentrennschnitts und des ersten Haupttrennschnitts liegende Bereich der Teilrippe um diese Verbindungslinie aus der Längsrippe heraus geklappt oder ausgehend von dieser Verbindungslinie aus der Längsrippe herausgebogen ist. Die aus der Längsrippe herausgeformte Teilrippe hat dabei die Form eines Dreiecks.

In einer vorteilhaften Weiterbildung dieser Ausführungsform wird vorgeschlagen, dass mindestens eine Teilrippe durch zwei zusätzliche Nebentrennschnitte von der Längsrippe getrennt ist, wobei die Nebentrennschnitte jeweils ausgehend von einem Kontaktpunkt des ersten Haupttrennschnitts in einem Winkel zu diesem verlaufen, und dass der zwischen den beiden Kontaktpunkten und der Verbindungslinie zwischen den beiden freien Endpunkten der beiden Nebentrennschnitte liegende Bereich der Teilrippe um diese Verbindungslinie aus der Längsrippe heraus geklappt oder ausgehend von dieser Verbindungslinie aus der Längsrippe herausgebogen ist. Hierbei hat die aus der Längsrippe herausgeformte Teilrippe die Form eines Vierecks.

Besonders günstig ist es ferner, wenn alle Trennschnitte und gegebenenfalls vorhandenen Nebentrennschnitte mindestens einer Teilrippe geradlinig verlaufen, wodurch seine eine besonders einfache Konstruktion und geringe Herstellungskosten ergeben.

Außerdem ist es besonders vorteilhaft, wenn die Teilrippen jeweils einen flachen und ebenen Kernbereich aufweist. Dadurch kann bei geringstmöglichem Luftwiderstand eine größtmögliche Wärmeübertragung an die an den Teilrippen entlangstreichende Luft erzielt werden, so dass ein optimaler Wirkungsgrad des Profilkörpers erreicht wird.

Besonders vorteilhaft ist es ferner, wenn alle Teilrippen einer Längsrippe im gleichen Winkel aus der Längsrippe herausgeformt sind. Der Winkel ist dabei vorteilhafterweise an den Winkel der Anbringung des erfindungsgemäßen Profilkörpers angepasst.

Gemäß einer besonders bevorzugten Ausführungsform ist vorgesehen, dass die Teilrippen in einem Winkel von 90° quer zur Längsrippe herausgeformt sind und Querrippen bilden. Diese Ausrichtung ist optimal für die relativ häufig erforderliche waagerechte Ausrichtung des Profilkörpers.

Vorteilhafterweise kann die Längsrippe in einem Winkel von 30° bis vorzugsweise 90° zur Grundfläche des Profilkörpers angeordnet sein.

In einer konstruktiv besonders einfachen und preiswerten Ausführungsform kann der Profilkörper einstückig mit der Längsrippe bzw. mit den Längsrippen und vorzugsweise auch einstückig mit einem in Längsrichtung verlaufenden Rohr zur Führung eines Wärmeträgermediums ausgeführt sein.

Um eine besonders einfache Ausformbarkeit der Teilrippen zu erhalten wird demgegenüber vorgeschlagen, die Längsrippe als separates Bauteil zu fertigen und nach erfolgter Ausformung der Teilrippen mit dem Profilkörper zu verbinden.

Für eine besonders große Flexibilität für unterschiedliche Anwendungsfälle des Profilkörpers können an der Grundfläche des Profilkörpers vorteilhafterweise mehrere Nuten angeordnet werden, in denen je nach Bedarf jeweils eine als separates Bauteil gefertigte Längsrippe mit ausgeformten Teilrippen befestigt, insbesondere eingeklipst werden kann. Vorzugsweise können dabei Längsrippen in der gewünschten Länge und/oder gewünschten Anzahl form- und/oder kraftschlüssig an dem Profilkörper befestigt werden. Auch kann ein und derselbe Profilkörper sowohl für senkrechte als auch für waagerechte Ausrichtungen eingesetzt werden, wenn entweder herkömmliche oder aber erfindungsgemäße Längsrippen eingesetzt werden.

Der Profilkörper kann vorzugsweise aus einem stranggepressten Aluminiumprofil gefertigt sein. Weiterhin können aus Design-Gründen beispielsweise verschiedenartig oder gleich geformte Öffnungen oder Vertiefungen mit konstanter oder unterschiedlicher Größe aus der Grundplatte des Profilkörpers ausgestanzt bzw. eingeprägt sein. Zur Verbesserung der Konvektion kann das Rohr auch in einem Abstand zur Grundfläche des Profilkörpers angeordnet sein, so dass Luft zwischen dem Rohr und der Grundfläche hindurch aufsteigen kann.

Die Erfindung betrifft ferner eine derartige separate Längsrippe für einen Profilkörper der vorstehend beschriebenen Art.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: erste Ausführungsvariante eines erfindungsgemäßen Profilkörpers mit zwei einstückigen Längsrippen,
- Figur 2:: zweite Ausführungsvariante eines erfindungsgemäßen Profilkörpers mit zwei separaten Längsrippen,
- Figur 3:: vergrößerte Darstellung eines Teilbereichs aus Figur 2,
- Figur 4:: separate Darstellung einer Längsrippe aus Figur 2, und
- Figur 5:: dritte Ausführungsvariante eines erfindungsgemäßen Profilkörpers mit zwei einstückigen Längsrippen in schräger Anordnung.

Die in den Figuren dargestellten Profilkörper 1 sind jeweils aus Aluminium und als Abschnitt eines stranggepressten Endlosprofils gefertigt. Sie werden in waagerechter Ausrichtung zur Wärmeübertragung in einer nicht dargestellten Heizvorrichtung eingesetzt.

Der Profilkörper 1 hat eine Grundfläche 2, an der zwei in Längsrichtung L des Profilkörpers 1 verlaufende Längsrippen 3 zur Wärmeabgabe angeordnet sind. Die abzugebende Wärme wird dem Profilkörper 1 durch ein einstückig hiermit gepresstes Rohr 4 zugeführt, durch ein Wärmeträgermedium hindurchfließt.

An beiden Längskanten 5 der Grundfläche 2 hat der Profilkörper 1 jeweils eine senkrecht abstehende Randleiste 6 zur Befestigung an nicht dargestellten Halteeinrichtungen und/oder an benachbarten Profilkörpern 1.

Erfindungsgemäß haben beide Längsrippen 3 jeweils eine Vielzahl von einstückig mit der Längsrippe 3 ausgeführten Teilrippen 7, welche jeweils an zwei einander gegenüberliegenden Querkanten 8 durch einen Trennschnitt von der Längsrippe 3 bzw. von der benachbarten Teilrippe 7 abgetrennt und in einem Winkel von 90° als Querrippen aus der Ebene der Längsrippe 3 herausgeschwenkt sind. Hierbei steht in jeder Teilrippe 7 ein etwa quadratischer Kernbereich 9 senkrecht zur insgesamt waagerecht einzubauenden Längsrippe 3. Zwischen den freien Querkanten 8 zweier benachbarter Teilrippen 7 ergeben sich dabei jeweils Öffnungen 10, deren größter Querschnitt in Höhe der Kernbereiche 9 erreicht wird. Die Öffnungen 10 ermöglichen eine ungestörte Konvektion auch bei waagerecht montiertem Profilkörper 1. Die erwärmte Luft kann durch die Öffnungen 10 hindurch zwischen den Teilrippen 7 und der Längsrippe 3 hindurch aufsteigen.

Die zwischen je zwei einander benachbarte Teilrippen 7 eingebrachten Trennschnitte verlaufen geradlinig und senkrecht zur Längsrichtung L der Längsrippe 3. Ebenso sind Teilrippen 7 jeweils um eine senkrecht zur Längsrichtung L der Längsrippe 3 verlaufende Achse 11 aus der Längsrippe 3 heraus verschwenkt, wobei die Achse 11 durch die Mitte der Teilrippe 7 bzw. durch die Mitte des Kernbereiches 9 verläuft. Eine Hälfte jeder Teilrippe 7 ist dabei auf die erste Seite der Längsrippe 3 ausgeschwenkt, während die andere Hälfte jeder Teilrippe 7 symmetrisch zur Achse 11 auf die gegenüberliegende zweite Seite der Längsrippe 3 ausgeschwenkt ist.

Die Trennschnitte zwischen allen Teilrippen 7 erstrecken sich jeweils von einem in einem Abstand zur Grundfläche 2 des Profilkörpers 1 befindlichen ersten Bereich 12 der Längsrippe 3 durchgehend bis zu einem in einem Abstand zur freien Längskante 13 der Längsrippe 3 befindlichen Bereich 14. Hierdurch verbleibt an der freien Längskante 13 der Längsrippe 3 ein äußerer Steg 15 und an der an der Grundfläche 2 des Profilkörpers 1 anliegenden Längskante 16 der Längsrippe 3 ein innerer Steg 17. Beide Stege 15 und 17 erstrecken sich jeweils in Längsrichtung L über die gesamte Länge der Längsrippe 3.

Um einen optimalen Wärmeübergang von den Stegen 15 und 17 der Längsrippe 3 auf die Teilrippen 7 zu erreichen sind die Teilrippen 7 über ihre vollständige Längserstreckung mit den innenseitigen Kanten des inneren und äußeren Steges 15 und 17 ohne Unterbrechung über Material 18 der Längsrippe 3 bzw. der Teilrippen 7 verbunden.

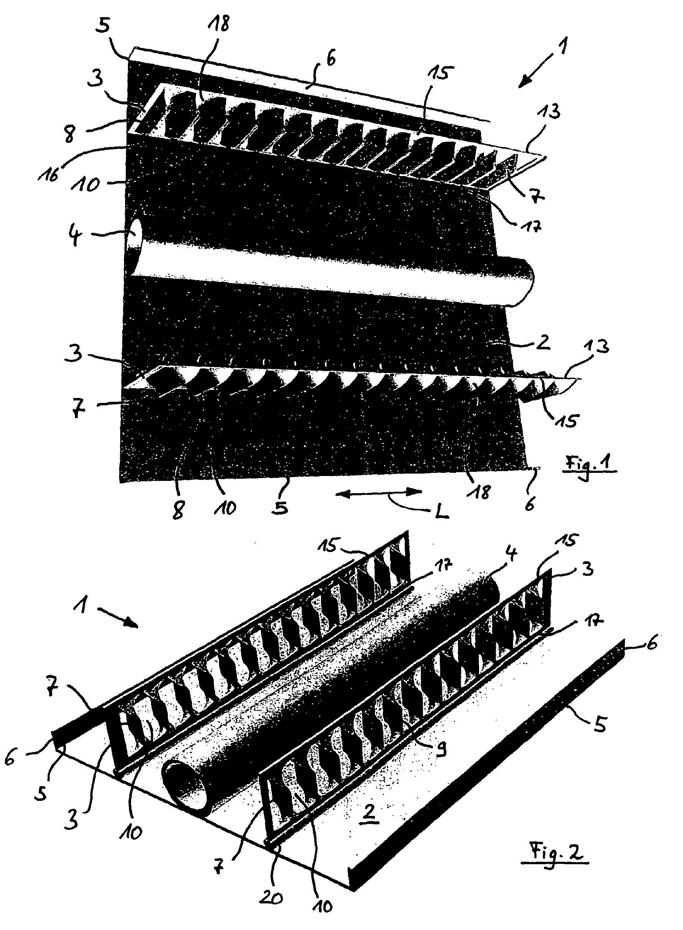

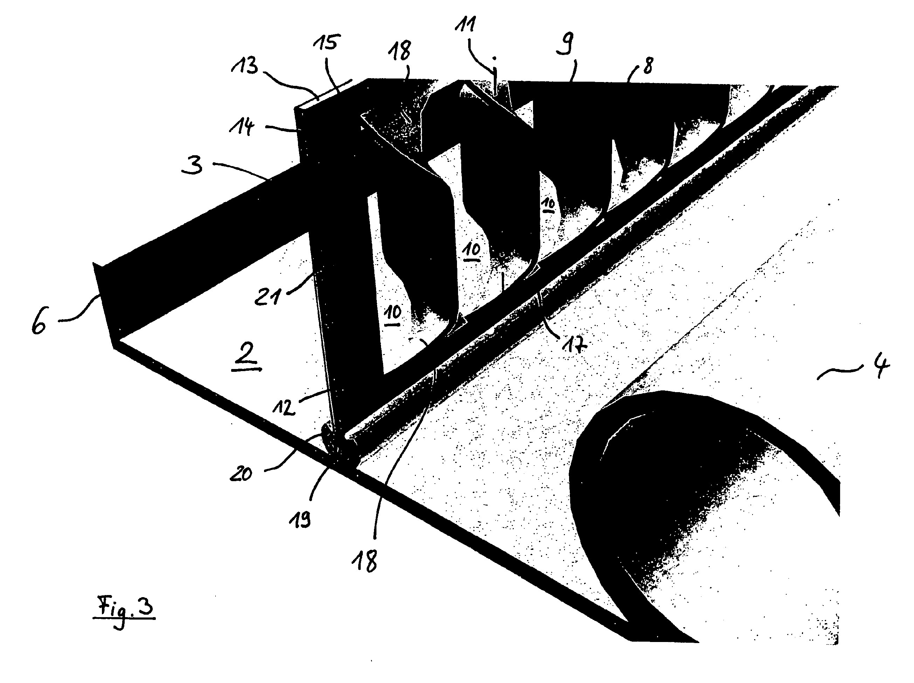

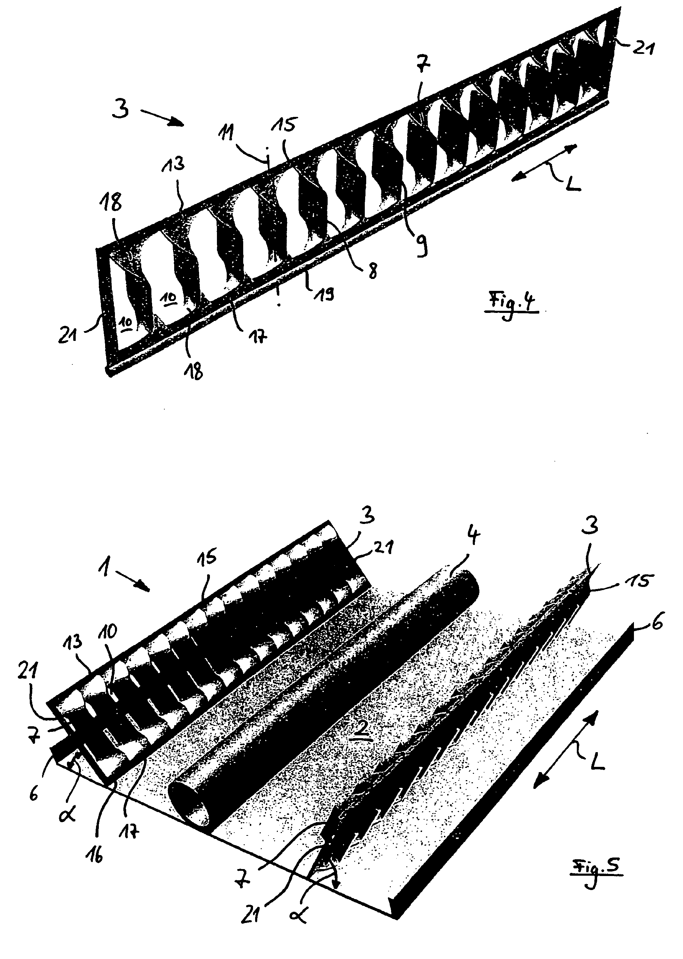

Während bei den beiden Ausführungen gemäß Figur 1 und 2 die Längsrippen 3 insgesamt senkrecht zur Grundfläche 2 des Profilkörpers 1 angeordnet sind, schließen die beiden Längsrippen 3 in Figur 5 jeweils einen Winkel α von etwa 60° zur Grundfläche 2 des Profilkörpers 1 ein.

In den Figuren 1 und 5 sind die Profilkörper 1 einstückig mit den Längsrippen 3 ausgeführt. Demgegenüber sind die in Figur 4 separat gezeigten Längsrippen 3 mit ausgeformten Teilrippen 7 bei der Ausführungsform gemäß Figur 2 und 3 als getrennte Bauteile an der Grundfläche 2 des Profilkörpers 1 befestigt. Hierzu weisen die Längsrippen 3 an ihrem innerem Steg 17 eine wulstfömige Verdickung 19 auf, die zur Befestigung am Profilkörper 1 formschlüssig und kraftschlüssig in eine an der Grundfläche 2 vorgesehene Nut 20 eingedrückt oder eingeschoben werden kann.

Außerhalb der beiden äußersten Teilrippen 7 werden die Längsrippen 3 jeweils durch einen Quersteg 21 abgeschlossen, wobei zwischen dem Quersteg 21 und der benachbarten Teilrippe 7 ebenfalls eine Öffnung 10 ausgebildet ist.

### Bezugszeichenliste für Profilkörper mit Längsrippen und Teilrippen

Längsrichtung L
Profilkörper 1
Grundfläche 2
Längsrippe 3
Rohr 4
Längskanten 5 der Grundfläche 2
Randleiste 6
Teilrippen 7
Querkanten 8 der Teilrippen 7
Kernbereich 9 der Teilrippen 7
Öffnungen 10
Achse 11 der Teilrippen 7
Erster Endbereich 12 der Trennschnitte innen in Längsrippe 3
freie Längskante 13 der Längsrippe 3
Zweiter Endbereich 14 der Trennschnitte außen an Längsrippe 3
äußerer Steg 15
an der Grundfläche 2 des Profilkörpers 1 anliegenden Längskante 16
innerer Steg 17
verbindendes Material 18 der Längsrippe 3 mit den Teilrippen 7
wulstfömige Verdickung 19
Nut 20
Quersteg 21

## Patentansprüche

1. Wärmeübertragender, insbesondere stranggepresster Profilkörper (1) für eine Heiz- oder Kühlvorrichtung, mit einer Grundfläche (2), an der mindestens eine in Längsrichtung (L) des Profilkörpers (1) verlaufende Längsrippe (3) zur Wärmeabgabe oder Wärmeaufnahme angeordnet ist,
wobei die Längsrippe (3) mehrere durch Teilbereiche der Längsrippe (3) gebildete Teilrippen (7) aufweist, die jeweils an mindestens einer Kante (8) durch einen Trennschnitt oder einen Spalt von der Längsrippe (3) getrennt sind, **dadurch gekennzeichnet dass** die Teilrippen in einem Winkel zwischen 3° und 135° derart aus der Längsrippe (3) herausgeformt, insbesondere herausgebogen oder herausgeklappt oder herausgeschwenkt, angeordnet sind, dass zwischen den freien Kanten (8) der Teilrippen (7) und der Grundfläche der Längsrippe (3) Öffnungen (10) ausgebildet sind.

2. Profilkörper nach Anspruch 1, **dadurch gekennzeichnet, dass** mindestens eine Teilrippe (7) an zwei einander gegenüberliegenden Kanten (8) jeweils durch einen Trennschnitt von der Längsrippe (3) getrennt und derart aus der Längsrippe (3) herausgeformt ist, dass zwischen beiden freien Kanten (8) des Teilrippe (7) und der Grundfläche der Längsrippe (3) jeweils eine Öffnung (10) ausgebildet ist.

3. Profilkörper nach Anspruch 1 oder 2, **dadurch gekennzeichnet, dass** der Trennschnitt oder die Trennschnitte mindestens einer Teilrippe (7) senkrecht zur Längsrichtung (L) der Längsrippe (3) angeordnet ist bzw. sind, und dass die Teilrippe (7) um eine senkrecht zur Längsrichtung (L) der Längsrippe (3) verlaufende Achse (11) aus der Längsrippe (3) herausgeformt ist.

4. Profilkörper nach einem der vorherigen Ansprüche, **dadurch gekennzeichnet, dass** mindestens zwei Teilrippen (7) paarweise unmittelbar aneinander angrenzen, wobei die Öffnung (10) direkt zwischen diesen beiden Teilrippen (7) ausgebildet ist.

5. Profilkörper nach einem der vorherigen Ansprüche, **dadurch gekennzeichnet, dass** der Trennschnitt oder die Trennschnitte mindestens einer Teilrippe (7) sich von einem in einem Abstand zur Grundfläche (2) des Profilkörpers (1) befindlichen ersten Bereich (12) der Längsrippe (3) durchgehend bis zu einem in einem Abstand zur freien Längskante (13) der Längsrippe (3) befindlichen zweiten Bereich (14) erstrecken, wobei an der freien Längskante (13) der Längsrippe (3) ein äußerer Steg (15) und an der an der Grundfläche (2) des Profilkörpers (1) anliegenden Längskante (16) der Längsrippe (3) ein innerer Steg (17) ausgebildet ist, die jeweils in Längsrichtung (L) mindestens über die Breite der Teilrippe (7) durchgehend verlaufen.

6. Profilkörper nach einem der Ansprüche 1 bis 4, **dadurch gekennzeichnet, dass** der Trennschnitt oder die Trennschnitte mindestens einer Teilrippe (7) sich von einem in einem Abstand zur Grundfläche (2) des Profilkörpers (1) befindlichen Bereich (14) der Längsrippe (3) durchgehend bis zur freien Längskante (13) der Längsrippe (3) erstrecken, wobei an der an der Grundfläche (2) des Profilkörpers (1) anliegenden Längskante (16) der Längsrippe (3) ein in Längsrichtung (L) mindestens über die Breite der Teilrippe (7) durchgehend verlaufender innerer Steg (17) ausgebildet ist, und wobei der sich über die Teilrippe (7) erstreckende Teil der freien Längskante (13) der Längsrippe (3) aus der Fläche der Längsrippe (3) herausgeformt ist.

7. Profilkörper nach Anspruch 2, insbesondere in Kombination mit einem der Ansprüche 3 bis 6, **dadurch gekennzeichnet, dass** die Achse (11), um die mindestens eine Teilrippe (7) aus der Längsrippe (3) herausgeformt ist, vorzugsweise mittig, zwischen den beiden Trennschnitten der Teilrippe (7) verläuft.

8. Profilkörper nach Anspruch 1, insbesondere in Kombination mit einem der Ansprüche 3 bis 6, **dadurch gekennzei**c**hnet, dass** die Achse (11), um die mindestens eine Teilrippe (7) aus der Längsrippe (3) herausgeklappt ist, oder die Linie, von der ausgehend mindestens eine Teilrippe (7) aus der Längsrippe (3) herausgebogen ist, in einem Abstand parallel zum Trennschnitt dieser Teilrippe (7) verläuft.

9. Profilkörper nach Anspruch 7 in Kombination mit einem der Ansprüche 5 oder 6, **dadurch gekennzeichnet, dass** die beiden sich jeweils zwischen einem der beiden Trennschnitte und der Achse (11) mindestens einer Teilrippe (7) erstreckenden Bereiche des inneren (17) und ggf. des äußeren (15) Steges durchgehend durch Material (18) der Teilrippe (7) bzw. durch Material (18) der Längsrippe (3) mit dem aus der Längsrippe (3) herausgeformten Bereich der Teilrippe (7) verbunden sind.

10. Profilkörper nach Anspruch 8 in Kombination mit einem der Ansprüche 5 oder 6, **dadurch gekennzeichnet, dass** der sich zwischen dem Trennschnitt und der Achse (11) mindestens einer Teilrippe (7) erstreckende Bereich des inneren (17) und ggf. des äußeren (15) Steges durchgehend durch Material (18) der Teilrippe (7) bzw. durch Material (18) der Längsrippe (3) mit dem aus der Längsrippe (3) herausgeformten Bereich der Teilrippe (7) verbunden ist.

11. Profilkörper nach einem der Ansprüche 1 bis 8, **dadurch gekennzeichnet, dass** mindestens eine Teilrippe (7) durch einen zusätzlichen Nebentrennschnitt von der Längsrippe (3) getrennt ist, wobei der Nebentrennschnitt ausgehend von einem Kontaktpunkt des ersten Trennschnitts in einem Winkel zu diesem verläuft, und dass der zwischen dem Kontaktpunkt und der Verbindungslinie zwischen den beiden freien Endpunkten des Nebentrennschnitts und des ersten Trennschnitts liegende Bereich der Teilrippe (7) um diese Verbindungslinie aus der Längsrippe (3) heraus geklappt oder ausgehend von dieser Verbindungslinie aus der Längsrippe (3) herausgebogen ist.

12. Profilkörper nach einem der Ansprüche 1 bis 8, **dadurch gekennzeichnet, dass** mindestens eine Teilrippe (7) durch zwei zusätzliche Nebentrennschnitte von der Längsrippe (3) getrennt ist, wobei die Nebentrennschnitte jeweils ausgehend von einem Kontaktpunkt des ersten Trennschnitts in einem Winkel zu diesem verlaufen, und dass der zwischen den beiden Kontaktpunkten und der Verbindungslinie zwischen den beiden freien Endpunkten der beiden Nebentrennschnitte liegende Bereich der Teilrippe (7) um diese Verbindungslinie aus der Längsrippe (3) heraus geklappt oder ausgehend von dieser Verbindungslinie aus der Längsrippe (3) herausgebogen ist.

13. Profilkörper nach einem der vorherigen Ansprüche, **dadurch gekennzeichnet, dass** alle Trennschnitte und gegebenenfalls vorhandenen Nebentrennschnitte mindestens einer Teilrippe (7) geradlinig verlaufen.

14. Profilkörper nach einem der vorherigen Ansprüche, **dadurch gekennzeichnet, dass** mindestens eine Teilrippe (7) einen flachen und ebenen Kernbereich (9) aufweist.

15. Profilkörper nach einem der vorherigen Ansprüche, **dadurch gekennzeichnet, dass** alle Teilrippen (7) einer Längsrippe (3) im gleichen Winkel aus der Längsrippe (3) herausgeformt sind.

16. Profilkörper nach einem der vorherigen Ansprüche, **dadurch gekennzeichnet, dass** die Teilrippen (7) in einem Winkel von 90° quer zur Längsrippe (3) herausgeformt sind und Querrippen bilden.

17. Profilkörper nach einem der vorherigen Ansprüche, **dadurch gekennzeichnet, dass** die Längsrippe (3) in einem Winkel von 30° bis vorzugsweise 90° zur Grundfläche (2) des Profilkörpers (1) angeordnet ist.

18. Profilkörper nach einem der vorherigen Ansprüche, **dadurch gekennzeichnet, dass** der Profilkörper (1) einstückig mit der Längsrippe (3) und vorzugsweise einstückig mit einem in Längsrichtung (L) verlaufenden Rohr (4) ausgeführt ist.

19. Profilkörper nach einem der Ansprüche 1 bis 17, **dadurch gekennzeichnet, dass** die Längsrippe (3) als separates Bauteil gefertigt und, vorzugsweise form- und/oder kraftschlüssig, mit dem Profilkörper (1) verbunden ist.

20. Profilkörper nach Anspruch 19, **dadurch gekennzeichnet, dass** an der Grundfläche (2) des Profilkörpers (1) mehrere Nuten (20) angeordnet sind, in denen jeweils eine als separates Bauteil gefertigte Längsrippe (3) befestigbar ist.

21. Längsrippe (3) für einen Profilkörper (1) nach einem der vorherigen Ansprüche **dadurch gekennzeichnet, dass** sie mehrere Teilrippen (7) aufweist, die jeweils an mindestens einer Querkante (8) durch einen Trennschnitt oder einen Spalt von der Längsrippe (3) getrennt sind, und die in einem Winkel zwischen 3° und 135° derart aus der Längsrippe (3) herausgeformt sind, dass zwischen den freien Querkanten (8) der Teilrippen (7) und der Grundfläche der Längsrippe (3) Öffnungen (10) ausgebildet sind.

## Claims

1. A heat transferring, in particular an extruded profile body (1) for a heating and cooling device, with a base surface (2) on which at least one longitudinal fin (3) running in the longitudinal direction (L) of the profile body (1) is arranged for heat emission or heat absorption,
wherein the longitudinal fin (3) has a plurality of louvers (7) formed by partial regions of the longitudinal fin (3), which fins are each separated from the longitudinal fin (3) on at least one edge (8) by a separating section or a gap,
**characterised in that**
the louvers are arranged so that they are formed, in particular bent or folded or swivelled out of the longitudinal fin (3) at an angle of between 3° and 135° in such a manner that openings (10) are formed between the free edges (8) of the louvers (7) and the base surface of the longitudinal fin (3).

2. A profile body according to Claim 1, **characterised in that** at least one louver (7) is separated by a separating section from the longitudinal fin (3) on two opposing edges (8), and is formed out of the longitudinal fin (3) so that an opening (10) is formed between the two free edges (8) of the louver (7) and the base surface of the longitudinal fin (3).

3. The profile body according to Claim 1 or 2, **characterised in that** the separating section or the separating sections of at least one louver (7) is or are arranged perpendicularly to the longitudinal direction (L) of the longitudinal fin (3), and **in that** the louver (7) is formed out of the longitudinal fin (3) about an axis (11) running perpendicularly to the longitudinal direction (L) of the longitudinal fin (3).

4. The profile body according to one of the preceding claims, **characterised in that** at least two louvers (7) immediately adjoin each other in pairs, wherein the opening (10) is formed directly between these two louvers (7).

5. The profile body according to one of the preceding claims, **characterised in that** the separating section or the separating sections of at least one louver (7) extends or extend from a first region (12) of the longitudinal fin (3) located at a distance from the base surface (2) of the profile body (1) continuously to a second region (14) located at a distance from the free longitudinal edge (13) of the longitudinal fin (3), wherein an outer bridge (15) is formed on the free longitudinal edge (13) of the longitudinal fin (3), and an inner bridge (17) is formed on the longitudinal edge (16) of the longitudinal fin (3) bearing against the base surface (2) of the profile body (1), which bridges each run continuously in the longitudinal direction (L) at least over the width of the louver (7).

6. The profile body according to one of Claims 1 to 4, **characterised in that** the separating section or separating sections of at least one louver (7) extends or extend continuously from a region (14) of the longitudinal fin (3) located at a distance from the base surface (2) of the profile body (1) continuously to the free longitudinal edge (13) of the longitudinal fin (3), wherein an inner bridge (17) continuously running in the longitudinal direction (L) at least over the width of the louver (7) is formed on the longitudinal edge (16) of the longitudinal fin (3) bearing against the base surface (2) of the profile body (1), and wherein the part of the free longitudinal edge (13) of the longitudinal fin (3) extending over the louver (7) is formed out of the surface of the longitudinal fin (3).

7. The profile body according to Claim 2, particularly in combination with one of Claims 3 to 6, **characterised in that** the axis (11) about which at least one louver (7) is formed from the longitudinal fin (3) runs preferably centrally between the two separating sections of the louver (7).

8. The profile body according to Claim 1, particularly in combination with one of Claims 3 to 6, **characterised in that** the axis (11), about which at least one louver (7) is folded out of the longitudinal fin (3), or the line from which at least one louver (7) is bent out of the longitudinal fin (3), runs at a distance parallel to the separating section of this louver (7).

9. The profile body according to Claim 7, in combination with one of Claims 5 or 6, **characterised in that** the two regions of the inner (17) and, if necessary, the outer (15) bridge, each extending between one of the two separating sections and the axis (11) of at least one louver (7) are connected continuously by material (18) of the louver (7) or by material (18) of the longitudinal fin (3) to the region of the louver (7) formed out of the longitudinal fin (3).

10. The profile body according to Claim 8, in combination with one of Claims 5 or 6, **characterised in that** the region of the inner (17) and, if necessary, the outer (15) bridge extending between the separating section and the axis (11) of at least one louver (7) is connected continuously by material (18) of the louver (7), or by material (18) of the longitudinal fin (3), to the region of the louver (7) formed out of the longitudinal fin (3).

11. The profile body according to one of Claims 1 to 8, **characterised in that** at least one louver (7) is separated from the longitudinal fin (3) by an additional secondary separating section, wherein the secondary separating section runs from a point of contact of the first separating section at angle to it, and **in that** the region of the louver (7) lying between the point of contact and the connecting line between the two free end points of the secondary separating section and the first separating section is folded out of the longitudinal fin (3) about this connecting line or is bent from this connecting line out of the longitudinal fin (3).

12. The profile body according to one of Claims 1 to 8, **characterised in that** at least one louver (7) is separated from the longitudinal fin (3) by two additional secondary separating sections, wherein the secondary separating sections each run from a point of contact of the first separating section at an angle to it, and **in that** the region of the louver (7) lying between the two points of contact and the connecting line between the two free end points of the two secondary separating sections is folded out of the longitudinal fin (3) about this connecting line or is bent out of the longitudinal fin (3) from this connecting line.

13. The profile body according to one of the preceding claims, **characterised in that** all the separating sections and any secondary separating sections provided of at least one louver (7) run rectilinearly.

14. The profile body according to one of the preceding claims, **characterised in that** at least one louver (7) has a flat and plane core region (9).

15. The profile body according to one of the preceding claims, **characterised in that** all the louvers (7) of a longitudinal fin (3) are formed out of the longitudinal fin (3) at the same angle.

16. The profile body according to one of the preceding claims, **characterised in that** the louvers (7) are formed out at an angle of 90° transversely to the longitudinal fin (3) and form transverse fins.

17. The profile body according to one of the preceding claims, **characterised in that** the longitudinal fin (3) is arranged at an angle of 30° to preferably 90° to the base surface (2) of the profile body (1).

18. The profile body according to one of the preceding claims **characterised in that** the profile body (1) is designed integrally with the longitudinal fin (3) and preferably integrally with a tube (4) running in the longitudinal direction (L).

19. The profile body according to one of Claims 1 to 17, **characterised in that** the longitudinal fin (3) is produced as a separate component and is connected to the profile body (1), preferably positively and/or non-positively.

20. The profile body according to Claim 19, **characterised in that** a plurality of grooves (20) are arranged on the base surface (2) of the profile body (1), in which grooves a longitudinal fin (3) produced as a separate component can be fastened.

21. A longitudinal fin (3) for a profile body (1) according to one of the preceding claims, **characterised in that** it has a plurality of louvers (7), each of which are separated from the longitudinal fin (3) on at least one transverse edge (8) by a separating section or a gap, and which are formed out of the longitudinal fin (3) at an angle of between 3° and 135° in such a manner that openings (10) are formed between the free transverse edges (8) of the louvers (7) and the base surface of the longitudinal fin (3).

## Revendications

1. Corps profilé caloporteur (1), notamment extrudé, pour un dispositif de chauffage ou de refroidissement, avec une surface de base (2) sur laquelle est disposée au moins une nervure longitudinale (3) s'écoulant en direction longitudinale (L) du corps profilé (1), pour le dégagement de chaleur ou l'absorption de chaleur,
la nervure longitudinale (3) comportant plusieurs nervures partielles (7) formées par des zones partielles de la nervure longitudinale (3), qui sont séparées chacune de la nervure longitudinale (3) sur au moins une arête (8) par une coupe de séparation ou par un interstice,
**caractérisé en ce que**
les nervures partielles sont façonnées, notamment cintrées, pliées ou pivotées sous un angle compris entre 3° et 135° à partir de la nervure longitudinale (3), de sorte qu'entre les arêtes libres (8) des nervures partielles (7) et la surface de base de la nervure longitudinale (3) se forment des ouvertures (10).

2. Corps profilé selon la revendication 1, **caractérisé en ce que**, sur deux arêtes opposées (8), au moins une nervure partielle (7) est séparée chaque fois de la nervure longitudinale (3) par une coupe de séparation et façonnée à partir de la nervure longitudinale (3), de sorte qu'entre les deux arêtes libres (8) de la nervure partielle (7) et de la surface de base de la nervure longitudinale (3) il se forme chaque fois une ouverture (10).

3. Corps profilé selon la revendication 1 ou 2, **caractérisé en ce que** la coupe de séparation ou les coupes de séparation d'au moins une nervure partielle (7) est ou sont disposée(s) à la perpendiculaire de la direction longitudinale (L) de la nervure longitudinale (3) et **en ce que** la nervure partielle (7) est façonnée à partir de la nervure longitudinale (3) autour d'un axe (11) s'écoulant à la perpendiculaire de la direction longitudinale (L) de la nervure longitudinale (3).

4. Corps profilé selon l'une quelconque des revendications précédentes, **caractérisé en ce qu'**au moins deux nervures partielles 7 sont directement adjacentes par paires, l'ouverture (10) étant ménagée directement entre lesdites deux nervures partielles (7).

5. Corps profilé selon l'une quelconque des revendications précédentes, **caractérisé en ce que** la coupe de séparation ou les coupes de séparation d'au moins une nervure partielle (7) s'étend(ent) en continu d'une première zone (12) de la nervure longitudinale (3) située à une distance de la surface de base (2) du corps profilé (1) jusqu'à une deuxième zone (14) située à une distance de l'arête longitudinale (13) libre de la nervure longitudinale (3), alors que sur l'arête longitudinale (13) libre de la nervure longitudinale (3) est formé un listel extérieur (15) et sur l'arête longitudinale (16) de la nervure longitudinale (3) qui est adjacente à la surface de base (2) du corps profilé (1) est formé un listel intérieur (17), qui s'écoulent chacun en continu en direction longitudinale (L) au moins sur la largeur de la nervure partielle (7).

6. Corps profilé selon l'une quelconque des revendications 1 à 4, **caractérisé en ce que** la coupe de séparation ou les coupes de séparation d'au moins une nervure partielle (7) s'étendent en continu d'un zone (14) de la nervure longitudinale (3) située à une distance de la surface de base (2) du corps profilé (1) jusqu'à l'arête longitudinale (13) libre de la nervure longitudinale (3), sur l'arête longitudinale (16) de la nervure longitudinale (3) qui est adjacente à la surface de base (2) du corps profilé (1) étant formé un listel intérieur (17) s'écoulant en continu dans la direction longitudinale (L), au moins sur la largeur de la nervure partielle (7) et la partie de l'arête longitudinale (13) libre de la nervure longitudinale (3) qui s'étend sur la nervure partielle (7) étant façonnée à partir de la surface de la nervure longitudinale (3).

7. Corps profilé selon la revendication 2, notamment en association avec l'une des revendications 3 à 6, **caractérisé en ce que** l'axe (11) autour duquel au moins une nervure partielle (7) est façonnée à partir de la nervure longitudinale (3), s'écoule de préférence au centre, entre les deux coupes de séparation de la nervure partielle (7).

8. Corps profilé selon la revendication 1, notamment en association avec l'une quelconque des revendications 3 à 6, **caractérisé en ce que** l'axe (11) autour duquel au moins une nervure partielle (7) est pliée à partir de la nervure longitudinale (3) ou la ligne, au départ de laquelle au moins une nervure partielle (7) est cintrée à partir de la nervure longitudinale (3) s'écoule à une distance, à la parallèle de la coupe de séparation de ladite nervure partielle (7).

9. Corps profilé selon la revendication 7, en association avec l'une quelconque des revendications 5 ou 6, **caractérisé en ce que** les deux zones du listel intérieur (17) et le cas échéant du listel extérieur (15) s'étendant chaque fois entre l'une des deux coupes de séparation et l'axe (11) d'au moins une nervure partielle (7) sont reliées en continu par de la matière (18) de la nervure partielle (7) ou par de la matière (18) de la nervure longitudinale (3) avec la zone de la nervure partielle (7) façonnée à partir de la nervure longitudinale (3).

10. Corps profilé selon la revendication 8, en association avec l'une quelconque des revendications 5 ou 6, **caractérisé en ce que** la zone du listel intérieur (17) et le cas échéant du listel extérieur (15) s'étendant entre la coupe de séparation et l'axe (11) d'au moins une nervure partielle (7) est reliée en continu par de la matière (18) de la nervure partielle (7) ou par de la matière (18) de la nervure longitudinale (3) avec la zone de la nervure partielle (7) façonnée à partir de la nervure longitudinale (3).

11. Corps profilé selon l'une quelconque des revendications 1 à 8, **caractérisé en ce qu'**au moins une nervure partielle (7) est séparée de la nervure longitudinale (3) par une coupe de séparation auxiliaire supplémentaire, la coupe de séparation auxiliaire s'écoulant au départ d'un point de contact de la première coupe de séparation principale sous un angle vers cette dernière et **en ce que** la zone de la nervure partielle (7) située entre le point de contact et la ligne de liaison entre les deux points d'extrémités libres de la coupe de séparation auxiliaire et de la première coupe de séparation principale est pliée à partir de la nervure longitudinale (3) autour de ladite ligne de liaison ou est cintrée à partir de la nervure longitudinale (3) au départ de ladite ligne de liaison.

12. Corps profilé selon l'une quelconque des revendications 1 à 8, **caractérisé en ce qu'**au moins une nervure partielle (7) est séparée de la nervure longitudinale (3) par deux coupes de séparation auxiliaires supplémentaires, les coupes de séparation auxiliaires s'écoulant chacune au départ d'un point de contact de la première coupe de séparation sous un angle vers cette dernière et **en ce que** la zone de la nervure partielle (7) située entre les deux points de contact et la ligne de liaison entre les deux points d'extrémité libres des deux coupes de séparation auxiliaires est pliée à partir de ladite ligne de liaison à partir de la nervure longitudinale (3) ou cintrée au départ de ladite ligne de liaison à partir de la nervure longitudinale (3).

13. Corps profilé selon l'une quelconque des revendications précédentes, **caractérisé en ce que** toutes les coupes de séparation et des coupes de séparation auxiliaires présentes le cas échéant d'au moins une nervure partielle (7) s'écoulent de façon rectiligne.

14. Corps profilé selon l'une quelconque des revendications précédentes, **caractérisé en ce qu'**au moins une nervure partielle (7) comporte un coeur (9) plat et plan.

15. Corps profilé selon l'une quelconque des revendications précédentes, **caractérisé en ce que** toutes les nervures partielles (7) d'une nervure longitudinale (3) sont façonnées sous un même angle à partir de la nervure longitudinale (3).

16. Corps profilé selon l'une quelconque des revendications précédentes, **caractérisé en ce que** les nervures partielles (7) sont façonnées sous un angle de 90° à la transversale, à partir de la nervure longitudinale (3) et forment des nervures transversales.

17. Corps profilé selon l'une quelconque des revendications précédentes, **caractérisé en ce que** la nervure longitudinale (3) est disposée sous un angle de 30° à de préférence 90° par rapport à la surface de base (2) du corps profilé (1).

18. Corps profilé selon l'une quelconque des revendications précédentes, **caractérisé en ce que** le corps profilé (1) est réalisé en monobloc avec la nervure longitudinale (3) et de préférence en monobloc avec un tube (4) s'étendant en direction longitudinale (L).

19. Corps profilé selon l'une quelconque des revendications 1 à 17, **caractérisé en ce que** la nervure longitudinale (3) est usinée en tant qu'élément séparé et reliée au corps profilé (1), de préférence par complémentarité de forme et/ou par complémentarité de force.

20. Corps profilé selon la revendication 19, **caractérisé en ce que** sur la surface de base (2) du corps profilé (1) sont disposées plusieurs rainures (20), dans chacune desquelles une nervure longitudinale (3) usinée en tant qu'élément séparé peut être fixée.

21. Nervure longitudinale (3) pour un corps profilé (1) selon l'une quelconque des revendications précédentes, **caractérisée en ce qu'**elle comporte plusieurs nervures partielles (7), qui sont séparées chacune de la nervure longitudinale (3) sur au moins une arête transversale (8) par une coupe de séparation ou par un interstice et qui sous un angle compris entre 3° et 135° sont façonnées à partir de la nervure longitudinale (3), de sorte qu'entre les arêtes latérales libres (8) des nervures partielles (7) et la surface de base de la nervure longitudinale (3) se forment des ouvertures (10).
